(19) Europäisches Patentamt

European Patent Office

Office européen des brevets

(11) **EP 1 184 437 A2**

(12) # EUROPEAN PATENT APPLICATION

(43) Date of publication:
06.03.2002 Bulletin 2002/10

(51) Int Cl.⁷: **C09J 7/02**, B32B 27/32

(21) Application number: **01108742.6**

(22) Date of filing: **06.04.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **01.09.2000 EP 00118960**<br>**01.09.2000 EP 00118967** | (71) Applicant: **3M Innovative Properties Company St. Paul, Minnesota 55133-3427 (US)**<br><br>(72) Inventor: **Kreckel, Karl Werner 42781 Haan (DE)**<br><br>(74) Representative: **Wilhelm, Stefan M. Office of Intellectual Property Counsel, c/o 3M Deutschland GmbH, Carl-Schurz-Strasse 1 41453 Neuss (DE)** |

(54) **Use of a pressure-sensitive adhesive tape for providing a skid-resistant surface**

(57) The present invention relates to the use of a pressure-sensitive adhesive film comprising a backing bearing a pressure-sensitive adhesive film, said backing comprising two or more layers, the exposed layer of the backing being a polymer layer wherein the polymer has a Vicat softening point of less than 65 °C, for providing skid resistance to a substrate.

Fig. 4

**Description**

<u>Field of the invention</u>

The present invention refers to the use of a pressure-sensitive adhesive film for providing a skid-resistant surface to a substrate and, in particular, to a substrate in a vehicle. The present invention furthermore refers to a novel pressure-sensitive adhesive tape suitable for the use according to the present invention.

<u>Background of the invention</u>

Surfaces with skid-resistant properties are required in a variety of applications. In vehicles such as automobiles, trains or aeroplanes, movable articles tend to overturn or slide under the action of forces resulting primarily from acceleration and deceleration during starting and stopping of the vehicle. For example, articles put in the glove box may slide around in the closed glove box or dropout of the glove box while open thereby damaging said articles or hurting the person sitting on the front passenger seat. An open soft drink can placed, for example, on a flat surface between the two front seats, may drop thereby spoiling the front seat area.

Various skid-resistant film materials are disclosed in the art. US 5,332,624 discloses a slip-resistant, flexible polyolefin film comprising rubber particles in a low molecular weight polyolefin polymer film. The film does not comprise a pressure-sensitive adhesive layer and cannot be always reliably secured to a substrate. EP 0,100,690 discloses a sheet covering with high coefficient of friction comprising a fine powder at least partially embedded in a cured resin layer and thus appears to provide mechanically coarse skid-resistant surfaces which are less acceptable, for example, for vehicle applications.

It was therefore an object of the present invention to provide aesthetically pleasing films which can be reliably adhered to an article and are useful for imparting skid-resistance to said article against a variety of materials. It was another object of the present invention to provide aesthetically pleasing films having skid-resistant properties with respect to a variety of materials. Other objects of the present invention are apparent to the person skilled in the art from the detailed description of the invention given below.

<u>Summary of the invention</u>

The present invention relates to the use of a pressure-sensitive adhesive film comprising a backing bearing a pressure-sensitive adhesive layer, said backing comprising two or more layers, the exposed layer of the backing being a polymer layer wherein the polymer has a Vicat softening point of less than 65 °C, for providing skid resistance to a substrate to restrain movement of an article on said substrate and, in particular, on a substrate in a vehicle. The exposed layer of the backing which upon application of the pressure-sensitive adhesive film to said substrate, provides a skid-resistant surface, preferably comprises one or more polymers which are selected from a group consisting of very low density polyethylenes (VLDPEs).

The present invention furthermore relates to a pressure-sensitive adhesive film comprising a backing bearing a pressure-sensitive adhesive layer, said backing comprising two or more layers, the exposed layer of the backing being a polymer layer wherein the polymer has a Vicat softening point of less than 65 °C and preferably additionally exhibits a surface roughness $R_Z \geq 12$ µm or a surface roughness $R_Z \leq 6$ µm.

<u>Brief description of the figures</u>

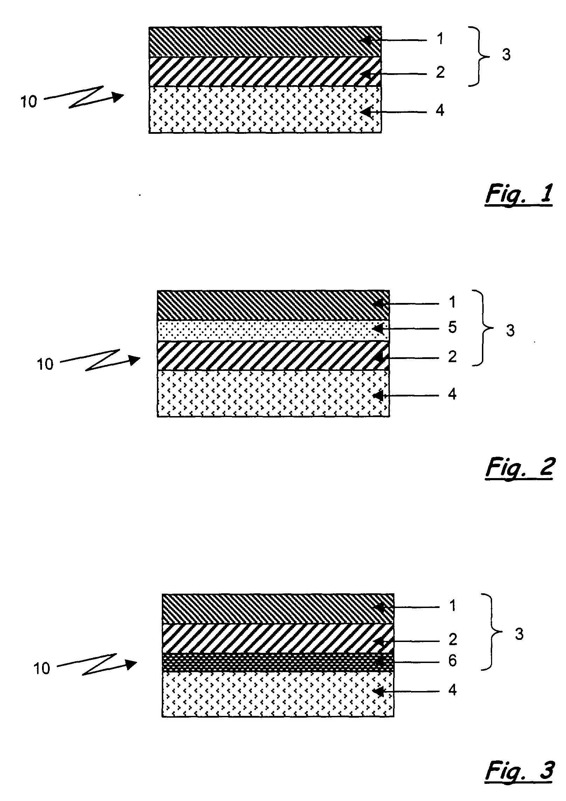

*Fig. 1* is a schematic representation of a cross-section of the pressure-sensitive adhesive film 10 suitable for use according to the present invention which comprises a backing 3 and a pressure-sensitive adhesive layer 4, said backing comprising an exposed layer 1 and a support layer 2.

*Fig. 2* is a schematic representation of a cross-section of the pressure-sensitive adhesive film 10 suitable for use according to the present invention which comprises a backing 3 and a pressure-sensitive adhesive layer, said backing comprising an exposed layer 1, an intermediate tie layer 5 and a support layer 2.

*Fig. 3* is a schematic representation of a cross-section of the pressure-sensitive adhesive film 10 suitable for use according to the present invention which comprises a pressure-sensitive adhesive layer 4 and a backing 3 which comprises an exposed layer 1, a support layer 2 and a printing layer 6.

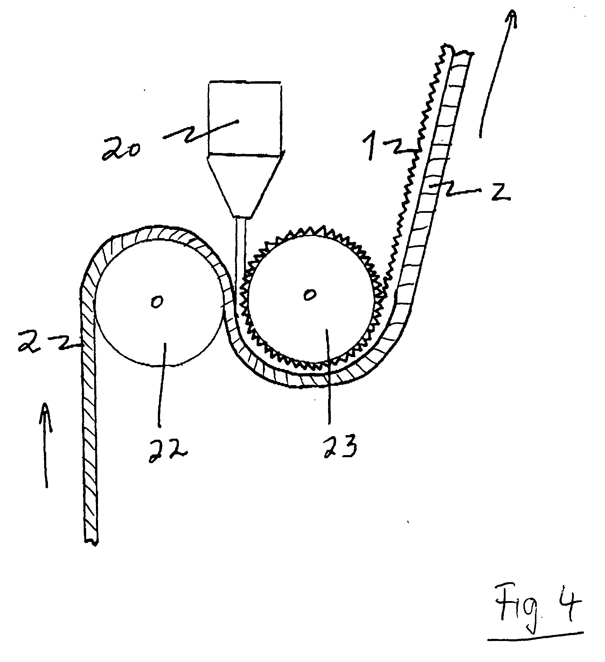

*Fig. 4* is a schematic representation of a method of preparing a backing 3 of the pressure-sensitive adhesive film useful in the present invention, said method comprising providing a support layer 2, extruding the polymer of the exposed adhesive layer 1 onto one surface of support layer 2 by means of a die 20, and passing the resulting laminate of support layer 2 and exposed layer 1 between rubber roll 22 and roll 23 which is polished or embossed to provide the desired surface characteristics of the exposed layer 1.

Detailed description of the invention

Above and below, the terms "layer" and "film" are used to describe structures whose thickness is substantially less than one or both of its length or width. The term "substantially less" means that the ratio of the length and/or width of the pressure-sensitive adhesive layer over its thickness is preferably at least 5, more preferably at least 7.5 and especially preferably at least 10. The thickness of the films and layers is preferably substantially less than both their length and width, and they preferably have two, essentially parallel opposed surfaces.

Pressure-sensitive adhesive films which are useful in the present invention comprise a backing 3 and a pressure-sensitive adhesive layer 4, as is shown in the schematic cross-sectional view of Fig. 1. The backing comprises an exposed layer 1 and a support layer 2.

The exposed layer 1 of the backing is a polymer layer wherein the polymer has a Vicat softening point of less than 65 °C, more preferably of not more than 60 °C and especially preferably of not more than 55 °C. The Vicat softening point is evaluated according to ISO 306:1994(E) using a force of 10 N by which the steel rod with its indenting tip is pressed onto the polymer sample, and a temperature increase rate of 120 °C/h. The Vicat softening point of the polymer of the exposed layer preferably is between 35 °C and 65 °C and, more preferably, between 45 °C and 65 °C. For Vicat softening points of less than 35 °C, the polymer of the exposed layer is too soft for many applications.

The term "exposed layer" or "exposed polymer layer" of the backing is to be understood broadly and covers continuous polymer layers covering part or all of the backing as well as discontinuous polymer layers wherein the polymer is applied in stripes or dots. Continuous exposed polymer layers covering all or essentially all of the backing, are preferred.

The polymers of exposed layer 1 having a Vicat softening point of less than 65 °C, can comprise one or more polymers which are preferably selected from a group of polymers consisting of very low density polyethylenes and copolymers comprising an olefin as a first comonomer and an alkyl(meth)acrylate or vinyl acetate as a second comonomer.

The terms "ultra low density polyethylene (ULDPE)", "very low density polyethylene (VLDPE)" and "linear very low density polyethylene (LVLDPE)" have been used interchangeably in the polyethylene art to designate the polymer subset of linear low density polyethylenes having a density less than or equal to 0.915 g/cm$^3$. Above and below, the term "very low density polyethylene" will be used for polyethylenes in this density area. The term "linear low density polyethylene (LLDPE) will be used for low density polyethylenes having a density of above 0.915 g/cm$^3$.

In the present invention, VLDPE having a density of 0.900 g/cm$^3$ or less, preferably of 0.895 g/cm$^3$ or less and more preferably of between 0.850 and 0.8925 g/cm$^3$ are preferred. The term VLDPE includes both homopolymers and copolymers of ethylene with one or more comonomers. Preferred comonomers for use in such copolymers include α-olefins having from 3 to about 14 carbon atoms, preferably from 4 to 10 carbon atoms and especially preferably from 4 to 8 carbon atoms. Representative examples of such comonomers include 1-butene, 1-pentene, 1-hexene, 4-methyl-pentene-1, 1-octene, 1-decene, and the like. Of these, 1-octene is particularly preferred. VLDPEs wherein one or more α-olefins are present in an amount ranging from about 1 to about 20 percent by weight and, in particular, from about 1 to about 10 percent by weight, are preferred. VLDPEs which are suitable in the present invention may comprise other comonomers which, if present, are preferably used in an amount of about 1 to about 15 and more preferably from about 1 to about 10 percent by weight of VLDPE. The overall amount of comonomers preferably is less than about 30 percent, more preferably less than about 25 percent and especially preferably less than about 20 percent by weight of the VLDPE.

While the VLDPEs preferred for use in the present invention are those polymerized with metallocene catalysts, any VLDPE having a density of less than 0.900 g/cm$^3$ and a Vicat softening point of less than 65 °C may be used. As used herein, the term "metallocenes" refers to polymerization catalyst systems such as the system disclosed in US 5,191,052. Metallocenes are complex combinations of a metal atom compound with cyclopentadienyl groups. The metallocenes preferably are sandwich complex arrangements of two cyclopentadienyl groups and a group IV transition Metal (Ti, Zr, Hf, Cr). Such catalysts are also named "single site" or "constrained geometry" catalysts. VLDPEs which are obtained by using a metallocene catalyst system are often also referred to as plastomers.

VLDPEs useful in the present invention preferably have a weight average molecular weight in the range from 50,000 to 200,000, more preferably from 75,000 to 200,000, and most preferably from 75,000 to 150,000. The VLDPEs preferably have a melt-flow index of at least 0.1 g /10 min and more preferably of at least 0.5 g/10 min.

Manufacture of VLDPEs is well known in the art. Any of several processes may be utilized including both high and low pressure processes preferably employing metallocene catalysts as is disclosed, for example, in US 5,191,052. VLDPEs which are commercially available include, for example, AFFINITY series polyolefin plastomers commercially available from Dow Plastics and ENGAGE series polyolefin plastomers commercially available from DuPont Dow Elastomers.

A second class of polymers preferred for use in the exposed layer 1 of the backing 3 includes copolymers comprising an olefin as a first comonomer and an alkyl(meth)acrylate or vinyl acetate as a second comonomer. Suitable olefins include ethylene, propylene, butylene, 2-methyl-pentene, hexene, octene, derivatives thereof, or combinations of an olefin or derivative thereof. Especially preferred are polymers wherein the olefin is ethylene. The alkyl group of the alkyl(meth)acrylate preferably has a carbon number from 3 to 25, more preferably from 4 to 20. Specific examples of preferred acrylates include methyl acrylate, ethyl acrylate, propyl acrylate, n-butyl acrylate, 2-ethylhexyl acrylate, decyl acrylate, octadecyl acrylate, methyl methacrylate, ethyl methacrylate, n-butyl methacrylate and the like. Of these, methyl acrylate, n-butyl acrylate and 2-ethylhexyl acrylate are particularly preferred.

Especially preferred are also copolymers comprising ethylene as a first comonomer and vinyl acetate as a second comonomer. The amount of the vinyl acetate comonomer with respect to the mass of the E/VA copolymer preferably is 15-45 wt.% and more preferably 20-40 wt.%. For percentages of the amount of the vinyl acetate comonomer outside of the range of 15-45 wt.%, the Vicat softening temperature of the E/VA copolymer tends to be unfavourable.

The ethylene/alkyl(meth)acrylate or vinyl acetate, respectively, copolymer (which is also referred to above and below as E/A(M)A or E/VA copolymer, respectively) can comprise other comonomers such as, for example, other free radically polymerizable monomers such as, for example, acrylic acids (i. e. acrylic, methacrylic and ethacrylic acid), other acrylates or other vinyl esters. These additional monomers are preferably present in small amounts, usually less than a total of about 10 percent by weight based upon the weight of the resulting copolymer.

The E/A(M)A or E/VA, respectively, copolymers which are useful in the present invention preferably have a melt-flow index of 0.5 -20 and more preferably of 2 - 10.

The E/A(M)A or E/VA, copolymers, respectively, useful in the present invention are known in prior art and can be produced, for example, by the method disclosed in US 3,350,372. Generally ethylene, alkyl(meth)acrylate or vinylacetate, respectively, and, if desired, further monomer(s) are metered into, for example, a high pressure autoclave reactor along with any one of a number of well-known free radical polymerization initiators (catalysts) in an effective amount. Particularly preferred catalysts include organic peroxides such as, for example, lauroyl peroxide, di-tert butyl peroxide, tert butyl peroxide, tert butyl perpivilate and various azo compounds.

The polymer which is used in the exposed layer of the backing can comprise one or more VLDPEs and/or one or more E/A(M)A or E/VA, copolymers, respectively, which are selected so that the Vicat softening point of the polymer of the exposed layer of the backing is less than 65 °C. Vicat softening points for VLDPEs or E/A(M)A or E/VA copolymers, respectively, are reported for various polymers in literature. The Vicat softening points of the polymers used in the exposed layer of the backing of the pressure-sensitive adhesive tapes of the Examples are given below. The Vicat softening points of polymers which are not reported in literature can easily be measured applying the procedure according to ISO 306:1994(E) using a force of 10 N and a heating rate of 120 °C/h as was specified above. As a rule of thumb, the Vicat softening point of a polymer, comprising a mixture of two or more polymer components each having a Vicat softening point of less than 65 °C is usually less than 65 °C, as well.

Thermoplastic polymer materials other than VLDPEs, E/A(M)As or E/VAs having a Vicat softening point of less than 65 °C may be used in the exposed layer 1 of the backing 3 of the pressure-sensitive adhesive films suitable in the present invention, as well.

The polymer used in the exposed layer of the backing of the pressure-sensitive adhesive tape which is useful in the present invention comprises in a first preferred embodiment preferably 1 to 5, more preferably 1 to 3 and especially preferably 1 to 2 VLDPEs. The VLDPE polymer(s) are preferably present in an amount of at least 50 percent by weight, more preferably of at least 75 percent by weight and especially preferably of at least 95 percent by weight with respect to the mass of the polymer of the exposed layer.

In a second preferred embodiment, the polymer used in the exposed layer of the backing of the pressure-sensitive adhesive tape preferably comprises 1 to 5, more preferably 1 to 4 and especially preferably 1 to 3 copolymers of E/A(M)A or E/VA, respectively. These copolymers are preferably present in an amount of at least 60 percent by weight, and more preferably of at least 80 percent by weight with respect to the mass of the polymer of the exposed layer.

In a third preferred embodiment, the polymer used in the exposed layer of the backing of the pressure-sensitive adhesive tape comprises at least one VLDPE and at least one E/A(M)A or E/VA copolymer, respectively. The ratio of the mass of the VLDPE(s) over the mass of the E/A(M)A-VA copolymer(s) preferably is between 0.2 and 10 and, more preferably, between 0.5 and 5. The sum of the masses of the VLDPE(s) and the E/A(M)A-VA copolymer(s) with respect to the mass of the polymer of the exposed layer preferably is at least 70 percent by weight and more preferably at least 75 percent by weight.

The polymer of the exposed layer of the backing may comprise further polymers such as, for example, homopolymers or copolymers including two or more comonomers, of an olefin, or derivatives of such olefin-comprising polymers. Examples for suitable additional olefin homopolymers include high density polyethylene (HDPE) which is commercially available, for example, from Dow Chemical Company, Midland, MI ("Dow") under the trade designation "4352N"; low density polyethylene (LDPE) which is commercially available, for example, from Dow under the trade designation "LDPE 722" (having a melt index of 8.0 g/10 min. and a density of 0.92 g/cm$^3$); polypropylene which is commercially available, for example, from Shell Chemical Company, Houston, TX ("Shell") under the trade designation "SRD-4-188" (having a melt flow rate of 5.0 g/10 min. and a butylene content of 5 percent); and polybutylene which is commercially available, for example, from Shell under the trade designation "PB DP-8220". Examples for suitable additional olefin copolymers include copolymers of ethylene and any of propylene, butylene, hexene, or octene; copolymers of propylene and any of ethylene, butylene, hexene, or octene; or terpolymers including an olefin such as a terpolymer of ethylene, butylene and hexene. A suitable terpolymer of ethylene, butylene, and hexene is commercially available from Exxon Chemical Company, Houston, TX, under the trade designation "Exact 3034" (having a melt index of 3.5 g/10 min. and a density of 0.902 g/cm$^3$).

The amount of additonal polymers which are different from VLDPEs and E/A(M)A-VA copolymers in the polymers of the exposed layer of the backing preferably is less than 20 percent by weight, more preferably less than 10 percent by weight and especially preferably less than 7.5 percent by weight with respect to the mass of the polymer of the exposed layer of the backing. The additional polymer, included into the polymer of the exposed layer of the backing, preferably exhibits a Vicat softening point of less than 75 °C, more preferably of less than 70 °C and especially preferably of less than 65 °C.

The polymer of the exposed layer of the backing may further comprise further additives such as, for example, film-building additives, processing aids, pigments, colorants, fluorescent agents, UV light absorbers, UV light inhibitors, antioxidants, tracers, anti-caking agents, and fillers. Exemplary ultraviolet light absorbers include those available from Ciba-Geigy Corporation, New York City, NY under the trade designation "Tinuvin 325" and "Tinuvin 900" and those available from Clariant Corporation, Charlotte, NC under the trade designation "Sandover VSU". Exemplary ultraviolet light inhibitors include those available from Ciba-Geigy under the trade designation "Tinuvin 292" and "Tinuvin 144". Exemplary antioxidants include those available from R. T.Vanderbilt Company, Inc., Norwalk, CT under the trade designation "Vanox 1320" and "Vanox ODP". Exemplary colorants (i. e., pigments and dyes) include titanium dioxide available from E. I. DuPont de Nemours & Company, Wilmington, DE ("DuPont") under the trade designation "Ti-Pure R-104". Exemplary fluorescent agents include those available from Ciba-Geigy under the trade designation "Uvitex OB". Exemplary anti-caking agents include silica available from Degussa Corporation, Teterboro, NJ under the trade designation "Siperant 22" and "Siperant D17". Exemplary fillers include calcium carbonate, for example, available from Georgia Marble Company, Atlanta, GA under the trade designation "Gamaco" and "Calwhite"; clay, for example, available from Huber Industrial Minerals, Macon, GA under the trade designation "Huber 40C" and "Huber 900"; and talc such as that available from Pfizer Minerals Pigments and Metals Division, New York City, NY under the trade designation "Pfizer CP 38-33".

The sum of the amounts of such further additives with respect to the mass of the exposed layer of the backing is low and preferably less than 20 percent by weight, more preferably not more than 10 percent by weight and especially preferably not more than 7.5 percent by weight. The amount of particle type further additives such as pigments or fillers has to be selected low enough so that such additives do not adversely affect the desired surface properties of the exposed layer 1.

The polymer of the exposed layer of the backing preferably comprises one or more polymer components having a Vicat softening temperature of less than 65 °C, more preferably of less than 60 °C and especially preferably of between 40 - 60 °C in order to provide a Vicat softening temperature of less than 65 °C for the polymer of the exposed layer of the backing. The Vicat softening point of the polymer of the exposed layer of the backing can optionally be decreased by incorporating into such polymer low-molecular weight organic additives such as, for example, oligomeric compounds, mineral oils, waxes and low molecular weight polyisobutylene. The amount of such additives preferably is not too high and, in particular, less than 15 percent by weight, more preferably less than 10 percent by weight and especially preferably less than 5 percent by weight.

The pressure-sensitive adhesive layer of the pressure-sensitive adhesive films useful in the present invention is preferably protected by a release liner so that the pressure-sensitive adhesive film can be die-cut to various sizes and shapes in order to match, for example, the shape and size of the substrate. It is also possible that the pressure-sensitive adhesive film can be wound up in form of a roll whereby the use of a release liner is usually not required.

The thickness of the exposed layer of the backing perferably is from 15 -400 μm, more preferably from 40 - 250 μm and especially preferably from 50 - 150 μm. A thickness of the exposed layer of the backing lower than 15 μm is less preferred because the static coefficient of friction and thus the skid-resistant properties of the exposed polymer layer is too low at thicknesses below 15 μm. Very thin layers of the exposed polymer are also less durable. In view of the relatively high thickness of the exposed layer of the backing, stretching of the exposed layer is less preferred.

It was found by the present inventor that the surface properties of the exposed layer are preferably carefully controlled.

In a first preferred embodiment of a pressure-sensitive adhesive film suitable for use in the present invention, the exposed layer of the backing exhibits a surface roughness $R_z$ of less than 6 μm. The surface roughness is measured according to DIN method 4768 detailed in the test section below. The exposed layer of said first preferred embodiment of a pressure-sensitive adhesive tape suitable for use in the present invention is very smooth and preferably exhibits a surface roughness $R_z$ of less than 5 μm and more preferably of less than 4 μm.

The exposed layer of the backing of the pressure-sensitive adhesive film is furthermore preferably transparent. The transparency of the exposed layer of the backing is linked with its smoothness but additionally requires the absence or a low amount, respectively, of scattering centers such as hollow filler particles like glass bubbles or absorbing particles such as pigments.

The light transmission properties of the exposed layer of the backing can be qualitatively assessed by inspecting a sample of an unsupported exposed layer with a thickness of 100 μm with the human eye at ambient conditions. If it is possible to see distinctly through such sample of the exposed layer, the exposed layer is referred to as transparent. The transmission of visible light is measured quantitatively as regular transmittance, $T_r$, according to ASTM D 1746-97, as is detailed in the test method section below. The regular transmittance of an unsupported exposed layer with a thickness of 100 μm preferably is at least 80 %, more preferably at least 85 % and especially preferably at least 90 %.

The surface of the exposed layer 1 of said preferred first embodiment preferably has a static coefficient of friction (COF) with respect to a LDPE substrate as measured according to the test method detailed below using a total weight of 200 g, of at least 3, more preferably of at least 3.5 and especially preferably of at least 4.0. The static coefficient of friction as measured with a total weight of 200 g with respect to a polished stainless steel substrate preferably is independently from the above at least 2.5 and more preferably at least 3.5. The coefficient of friction with respect to a Meranti wood substrate as measured with a total weight of 200 g preferably is independently from the above at least 1.3 and more preferably at least 1.5. Because of their advantageous coefficients of friction with respect to a variety of surfaces, the pressure-sensitive adhesive films of said preferred first embodiment are preferred for various applications and, in particular, for applications in vehicles. This is because these pressure-sensitive adhesive films preferably exhibit a high transparency so that they have an aesthetically pleasing appearance and can be used, for example, in conjunction with a print layer in said pressure-sensitive adhesive film as is detailed below.

The exposed layer of said preferred first embodiment preferably exhibits independently from the above a slight tackiness to the touch. This property can quantitatively be characterized by the 90° peel adhesion of a film of biaxially-oriented polypropylene (BOPP) from the exposed layer of the backing as measured according to FINAT method 2. referred to in the test method section below. The 90° peel adhesion of the BOPP film from the exposed layer of the backing of said preferred first embodiment of the pressure-sensitive adhesive film useful in the present invention preferably is at least 0.1 N/2.54 cm , more preferably of at least 0.2 N/2.54 cm and especially preferably of at least 0.3N/2.54 cm.

In a second preferred embodiment of a pressure-sensitive adhesive tape suitable for use in the present invention, the exposed layer of the backing exhibits a surface roughness $R_Z$ of at least 12 μm, more preferably of at least 14 μm and especially preferably of at least 16 μm.

The optical properties of the exposed layer of the backing of said second preferred embodiment of a pressure-sensitive adhesive tape useful in the present invention are linked with its surface roughness, and the exposed layer is preferably slightly hazy but still transparent. It is also possible to use exposed layers 1 of the backing which are translucent. Slightly hazy but still transparent exposed layers with a matte surface finish exhibit an especially pleasing aestheic appearance.

The light transmission properties of the exposed layer with a surface roughness of more than 12 μm may be transparent, slightly translucent or even translucent depending, for example, for an inherently transparent polymer material on the value of the surface roughness. If light transmitting through the exposed layer is diffused so that the exposed layer appears slightly opaque to opaque and is only partially transparent so that the presence of an object arranged immediately below the exposed surface can be seen but so that said object cannot be seen distinctly, it is termed translucent. Quantitatively, the regular transmittance of the exposed layer preferably is less than 75 % and more preferably between 50 - 70 %.

The surface of the exposed layer of said preferred second embodiment preferably has a static coefficient of friction COF as measured using a total weight of 200 g with respect to an LDPE substrate as measured according to the test method detailed below, of at least 1.1, more preferably of at least 1.5 and especially preferably of at least 2. The coefficient of friction with respect to a polished stainless steel substrate as measured using a total weight of 200 g preferably is independently from the above at least 1.5, more preferably at least 1.8 and especially preferably at least 2. The coefficient of friction with respect to a Meranti wood substrate as measured using a total weight of 200 g preferably is independently from the above at least 1.3 and more preferably at least 1.5.

Because of their advantageous static coefficient of friction with respect to a variety of surfaces, the pressure-sensitive adhesive films of said preferred second embodiment are preferred for various applications and, in particular, for applications in vehicles. The surface of the exposed layer has a low sensitivity with respect to scratching because of its translucent appearance and can be used for prolonged times without losing its appealing aesthetic appearance.

The support layer 2 of the pressure-sensitive adhesive film 10 may be selected from a wide variety of polymer materials which are preferably selected from the group of stretchable polymer materials in order to allow for stretching of the support layer 2. Hot-melt extrudable polymers such as thermoplastic polymers are especially preferred. Representative examples of polymers suitable for the support layer 2 include polyamides (e. g., nylon); polyolefins (e. g., polyethylenes, polypropylenes, polybutylenes, poly-4-methylpentenes and others); polystyrenes; polyesters; copolyesters; polyvinyl chlorides; polyethylene vinyl acetates; copolymers (e. g., ethylene propylene copolymers, ethylene butylene copolymers, ethylene hexene copolymers, ethylene octene copolymers, propylene butylene copolymers, and thermoplastic rubber block copolymers); polymethyl methacrylates; and mixtures and copolymers thereof. Preferred materials for a support layer include polypropylenes, polypropylenes blended with other polyolefins, and copolymers of propylene and other alphaolefins in amounts, for example, of up to about 50 percent by weight based on total weight of the substrate. Preferred materials for a support layer furthermore include semi-crystalline polypropylene having a melting point greater than about 150 °C, semi-crystalline polyethylene having a melting point greater than about 100°C, and semi-crystalline or amorphous polyester. The most preferred material for the support layer 2 is polyethylene terephthalate (PET), especially oriented PET.

Many of the aforementioned polymeric materials are commercially available and may be used without modification. Alternatively, they may be modified in ways well known to one of ordinary skill in the art. For example, the compositions for preparing substrates can be modified with minor amounts of conventional modifiers, for example, colorants (i. e. pigments, dyes), fluorescing agents, antioxidants, and fillers, such as zinc oxide, titanium dioxide, calcium carbonate or hydrocarbon resins.

The support layer 2 is preferably selected so as to provide suitable handleability and conformance properties to the pressure-sensitive adhesive film. If the pressure-sensitive adhesive film of the present invention is to be applied, for example, to a three-dimensional or curved surface of a substrate, a more conformable support layer is preferably selected. If the pressure-sensitive adhesive film is applied to a relatively flat surface of a substrate, a stiffer support layer is preferably chosen.

The support layer or layers preferably have independently from each other a thickness of between 10 - 200 $\mu$m.

If the pressure-sensitive adhesive layer 4 is applied to the support layer 2 as shown, for example, in Fig.1 it is usually desirable that the surface of the support layer 2 onto which the pressure-sensitive adhesive layer 4 is applied, is corona-treated, flame-treated or plasma-treated or that a chemical primer layer is applied to such surface in order to obtain a secure anchoring of the pressure-sensitive adhesive layer on the support layer. Such pre-treatment of the surface of the support layer is preferably applied immediately before application of the pressure-sensitive adhesive layer.

It is preferred in the present invention that the support layer of the pressure-sensitive adhesive film is oriented or stretched. Stretching can be obtained by first providing the support layer as a simple film and then stretching it with subsequent lamination of the exposed layer of the backing to the stretched support layer. Stretching of the support layer tends to provide desirable properties such as stiffness and dimensional stability to the support layer which are important during die-cutting and converting processes.

The term "stretched" as used above and below refers to stretching of the backing at a temperature below its melting point. Stretching can be performed in one or two directions which is referred to as monoaxial or biaxial stretching. Biaxial stretching can be performed by stretching into the first and second stretch direction, respectively, subsequently or simultaneously.

The term "stretch ratio" as used herein to describe a method of stretching or a stretched film, respectively, indicates the ratio of a linear dimension of a given portion of a stretched film to the linear dimension of the same portion prior to stretching. Alternatively, the term "stretch parameter" may be used which is defined as the value of the stretch ratio minus 1.

Monoaxial stretching may be performed by propelling the film over rollers of increasing speed into the machine direction (MD) as is described, for example, in US 2,618,012, US 3,046,599, US 3,502,766 or US 3,890,421. Both monoaxial and biaxial stretching is preferably performed, however, by using a flat film tenter apparatus that grasps the sheet (employing such means as a plurality of clips) along the opposing edges of the sheet and propels the grasping means in one stretch direction to provide a monoaxially stretch sheet, first in a first stretch direction and subsequently in a second stretch direction to provide a sequentially biaxially stretched sheet and simultaneously in a first and a second stretch direction to provide a simultaneously biaxially stretched sheet of film, respectively. Typically but not always, the first and the second stretch direction are substantially perpendicular to each other and are in the machine directon ("MD") of the sheet of film and in the cross direction ("CD") of the sheet of film. Biaxial simultaneous stretching in MD and CD can be obtained, for example, by propelling the grasping in the MD along diverging rails. By increasing clip speed in the MD, stretch in the MD occurs while by using diverging rails, CD stretch occurs. Such methods and suitable flat film tenter apparati are described in US 4,675,582, US 4,825,111, US 4,853,602, US 5,036,262, US 5,051,225 and US 5,072,493.

The stretch parameters for monoaxial stretching preferably varies between 3:1 and 15:1 and more preferably between 4:1 and 12:1.

The stretch parameters for biaxial stretching in the first and second direction of stretching preferably are independently from each other between 3:1 and 15:1, more preferably between 4:1 and 12:1 and especially preferably between 5:1 and 10:1. The term "simultaneous biaxial stretching" as used above and below means that at least 10 % of the final stretch in each of the first and second direction of stretching being performed simultaneously, more preferably at least 25 %, and still more preferably at least 40 %. Although simultaneous biaxial stretching can be obtained by tubular blown film stretching processes, it is preferred to use flat film tenter stretching processes just described to minimize thickness variations and avoid processing difficulties typically associated with tubular blown film processes.

The backing may comprise one or more further layers in addition to the exposed layer 1 and the support layer 2. In the embodiment of the pressure-sensitive adhesive film according to Fig. 2 which is useful in the present invention, the backing additionally comprises a tie layer 5 between the exposed layer 1 and support layer 2.

The tie layer 5 is preferably selected to increase the bonding between the exposed layer 1 and the support layer 2. If the exposed layer 1 is based, for example, on one or more VLDPEs and is thus essentially unpolar whereas the support layer is an unstretched or stretched, respectively, PET layer having some polarity, a tie layer 5 comprising one or more polymers selected from a group comprising HDPEs and LDPEs may be advantageously used to compromise between the different polarities of the exposed layer 1 and the support layer 2, respectively, thereby increasing the bond strength between such layers.

The thickness of the tie layer preferably is between 10 - 400 μm, more preferably between 10 - 300 μm and especially preferably between 20 - 100 μm. The sum of the thicknesses of the exposed layer 1 and the tie layer 5, respectively, preferably ranges from 30 - 900 μm, more preferably from 50 - 400 μm and especially preferably from 70 - 250 μm. The ratio of the thicknesses of the exposed layer 1 and the tie layer 5 preferably is between 0.25 and 4 and more preferably between 1 and 3.

The strength of the bond between the exposed layer and the support layer can furthermore be increased by treating the adjacent surfaces of the exposed layer and the support layer to be bonded together, by conventional surface treatments such as corona treatment, flame treatment or plasma treatment.

In the embodiment of the pressure-sensitive adhesive tape according to Fig. 3 which is useful in the present invention, the backing additionally comprises a printing layer 6 on the surface of the support layer 2 which faces the pressure-sensitive adhesive layer 4. The printing can be applied with conventional techniques such as, for example, flexo-printing or digital printing. The printing layer may be continuous or discontinuous. The coverage of the printing with respect to the surface of the support layer may vary over a broad range and preferably is from 0.5 to 1.

Alternatively, a printing layer can also be present between the exposed layer 1 of the backing 3 and its support layer 2 or between the exposed layer 1 or the support layer 2, respectively, and the tie layer 5, if present.

The pressure-sensitive adhesive film suitable for use in the present invention further comprises a pressure-sensitive adhesive layer 4 which is applied to the surface of the backing which is opposite to the exposed layer of the backing. Useful adhesives according to the present invention include all pressure-sensitive adhesives.

Acrylate-based pressure-sensitive adhesives are preferred because they are clear, are UV-stable and maintain their properties over time which is particularly important for vehicle applications.

Acrylate-based pressure-sensitive adhesives suitable in the present invention are described in some detail, for example, in Handbook of Pressure-Sensitive Adhesive Technology, ed. by D. Satas, Satas and Associates Publishers, New York 1989, pp. 396 - 450. The pressure-sensitive adhesive layer can be introduced into the pressure-sensitive adhesive film of the present invention by laminating an adhesive layer (often referred to as transfer tape or film) or a double-coated pressure-sensitive adhesive tape onto the surface of the support layer 2 opposite to the exposed layer or, if present, onto the exposed surface of any layer present on said surface of the support layer. Alternatively, the pressure-sensitive adhesive can be applied by hotmelt extrusion or hotmelt coating, or it can be coated as an organic or aqueous solution or dispersion with subsequent evaporation of the solvent and optional curing, or as a solvent-free, pre-polymerized syrup with subsequent curing. The pressure-sensitive adhesive layer 4 is preferably applied by hotmelt extrusion or hotmelt coating.

A particularly suitable acrylate based pressure-sensitive adhesive useful in the present invention, comprises homopolymers and more preferably copolymers comprising one or more alkyl acrylates the alkyl groups of which have an average of 4-14 C atoms. The term average of 4-14 C atoms means that the average number of C atoms of the alkyl acrylate compounds, weighed by their respective percentage by weight with respect to the mass of the alkyl acrylate component, is between 4-14 and, in particular, between 4-12 C atoms. Useful alkyl acrylates (i.e., acrylic acid alkyl ester monomers) include, e. g. linear or branched monofunctional unsaturated acrylates or methacrylates of non-tertiary alkyl alcohols, the alkyl groups of which have from 4 to 14 and, in particular, from 4 to 12 carbon atoms. Examples of these lower alkyl acrylates used in the invention include but are not limited to n-butyl acrylate, isobutyl acrylate, hexyl acrylate, 2-ethylhexyl acrylate, isooctyl acrylate, n-octyl acrylate, n-octyl methacrylate, 2-methylbutyl acrylate, isononyl acrylate, n-nonyl acrylate, isoamylacrylate, n-decyl acrylate, isodecyl acrylate, isodecyl methacrylate, isobornyl acrylate, 4-methyl-2-pentyl acrylate and dodecyl acrylate. Preferred lower acrylate and methacrylate esters include isooctyl acrylate, n-butyl acrylate, 2-ethylhexyl acrylate, isononyl acrylate and dodecyl acrylate.

The acrylate-based pressure-sensitive adhesive used in the adhesive layer 4, preferably is a homopolymer or copolymer containing up to 5 and, in particular, 1-4 alkyl acrylates. The average number of carbon atoms in the alkyl groups of the alkyl acrylates as defined above preferably is between 4-14, especially between 4-12 and very particularly between 5-10. The concentration of the alkyl acrylate component with respect to the mass of the precursor of the pressure-sensitive adhesive preferably is at least 75 percent by weight, and, in particular, at least 85 percent by weight.

The acrylate-based pressure-sensitive adhesive useful in the present invention may contain alkyl esters of unsaturated aliphatic carboxylic acids other than acrylic acid as comonomers such as, for example, alkyl maleates and alkyl fumarates (based, respectively, on maleic and fumaric acid). In this regard, dibutyl maleate, dioctyl maleate, dibutyl fumarate and dioctyl fumarate are preferred. The amount of ester compounds of unsaturated aliphatic carboxylic acids other than acrylic acid preferably is not too high and, in particular, does not exceed 25 percent by weight with respect to the mass of the alkyl acrylate component. The precursor of the pressure-sensitive adhesive useful in the present invention may further comprise polar comonomers. Examples for strongly polar monomers are acrylic acid, methacrylic acid and acrylamides while N-vinyl lactams such as, for example, N-vinyl pyrrolidone, N-vinyl caprolactam, acrylonitrile and dimethyl amino-propyl methacrylate are typical examples of moderately polar monomers.

If required, the acrylate-based pressure-sensitive adhesives useful in the present invention may comprise additives such as tackifiers, plasticizers, fillers, antioxidation agents, UV-stabilizers, crosslinkers or inorganic or organic fibers.

The pressure-sensitive adhesive films useful in the present invention can be obtained by using the method schematically shown in Fig. 4. A support layer 2 is provided which may be stretched or unstretched. The support layer may optionally be treated by known priming processes such as corona treatment, flame treatment or plasma treatment to promote adhesion of subsequent layers. The polymer composition of the exposed layer 1 is hotmelt-coated or extruded onto the surface of the support layer 2 through die 20 of an extruder. The laminate obtained comprising the exposed layer 1 and the support layer 2, is subsequently passed between roll 22 and 23 while the temperature of the polymer of the exposed layer 1 is still sufficiently high so that the surface of the exposed layer 1 can be modified by means of roll 23. The surface of roll 23 is, for example, a highly polished stainless steel surface to provide an exposed layer 1 having a low surface roughness, $R_z$, of less than 6 $\mu$m. If the exposed layer is required to have a surface roughness of at least 12 $\mu$m, the surface of the roll 23 is preferably embossed. It was found by the present inventor that a desired value of the surface roughness can be obtained by using several embossing patterns. For a given value of the surface roughness, the embossing pattern is preferably selected so that a high value of the static coefficient of friction is obtained.

The pressure-sensitive adhesive layer 4 can subsequently be laminated or coated, respectively, onto the surface of support layer 2 opposite to the exposed layer 1 to give the pressure-sensitive adhesive film suitable in the present invention shown in Fig. 1. Application of the pressure-sensitive adhesive layer 4 is not shown in Fig. 4.

It was found by the present inventor that pressure-sensitive adhesive films comprising a backing 3 bearing a pressure-sensitive adhesive layer 4, said backing comprising two or more layers, the exposed layer 1 of the backing being a polymer layer wherein the polymer has a Vicat softening point of less than 65 °C, are useful for providing skid resistance to a substrate. This is obtained by adhering said pressure-sensitive adhesive film to part or all of the surface of the substrate. An article which is placed onto the substrate, sees the exposed layer which provides a skid-resistant surface, and the movement of the article on the substrate is generally effectively restrained because of the favourable coefficient of friction of the exposed layer 1 to a variety of materials.

The pressure-sensitive adhesive films suitable in the present invention are particularly suitable for applications in vehicles.

US 4,339,485 discloses pressure-sensitive adhesive films having an unstretched exposed release layer comprising a polyolefin elastomer having amongst other specified properties a density of between 0.80 and 0.90 g/cm$^3$. The release layer of such pressure-sensitive adhesive tape typically includes high density polyolefin components, however so that they exhibit higher Vicat softening points. US S. N. 09/238,515 filed by the present applicant on January 27, 1999, discloses release articles including pressure-sensitive adhesive tapes wherein the exposed release layer comprises a polymer comprising an olefin and an alkyl(meth)acrylate.

It was not recognized in the prior art that pressure-sensitive adhesive tapes comprising a backing bearing a pressure-sensitive adhesive layer, said backing comprising two or more layers, the exposed layer of the backing being a polymer layer wherein the polymer has a Vicat softening point of less than 65 °C, can be used for providing a skid-resistant surface to a substrate.

Pressure-sensitive adhesive films comprising a backing bearing a pressure-sensitive adhesive layer, said backing comprising two or more layers, the exposed layer of the backing being a polymer layer wherein the polymer has a Vicat softening point of less than 65 °C , are novel and preferred for the use of imparting skid resistance to an article, and they are therefore also subject matter of the present invention. Especially preferred are pressure-sensitive adhesive films comprising a backing bearing a pressure-sensitive adhesive layer, said backing comprising two or more layers, the exposed layer of the backing being a polymer layer wherein the polymer has a Vicat softening point of less than 65 °C and exhibits a surface roughness $R_z$ of at least 12 $\mu$m, or exhibits a surface roughness of less than 6 $\mu$m. Preferred embodiments of such pressure-sensitive adhesive tapes include those described above which are suitable and, in particular, preferred for the use according to the present invention.

The present invention will be further described with regard to the following examples. These examples are offered to further illustrate the various specific and preferred embodiments and techniques. It should be understood, however, that many variations and modifications may be made while remaining within the scope of the present invention.

Prior to this, some test methods are described which will be used in the examples.

Test methods

*Roughness, $R_z$ DIN*

The mechanical surface roughness of the exposed layer 1 of the pressure-sensitive adhesive film 10 was measured according to the method Deutsche Industrie Norm (DIN) 4768 (Sheet 1) using a Model T-2000 Mechanical Profilometer from Hommelwerke GmbH, Schwenningen, Germany. The results are recorded as $R_z$ (average roughness in z-direction) which is defined in DIN 4768 (Sheet 1) and given in $\mu$m.

*Static coefficient of friction*

Coefficient of friction was measured according to Deutsche Industrie Norm (DIN) 53 375 - B.

The pressure-sensitive adhesive film to be tested was adhered to the surface of a 7.5 cm x 23.5 cm aluminum test plate. The film had the dimensions of 7.5 cm x 14.5 cm and was adhered to the aluminum test plate over its entire area by means of its pressure-sensitive adhesive layer

The bottom face of the sled comprised a flat surface area of 40 cm$^2$ (6.3 cm x 6.3 cm) of the materials against which the static coefficient of friction is measured (test substrates). The total weight of the sled and 40 cm$^2$ of the test substrate was 200 g or 1,200 g.

*Test substrates:*

*1) Polished stainless steel*

The surface of the stainless steel plate used for testing coefficient of friction had a surface roughness value $R_z$ of 1.0. The roughness value $R_z$ was determined by a laser profilometer available from UBM Messtechnik GmbH, Ettlingen, Germany, model number UB-16. The roughness values were calculated by this instrument in accordance with Deutsche Industrie Norm (DIN) 4768 and DIN 4762. The stainless steel plate was cleaned prior to each measurement using a tissue with methyl ethyl ketone, then with a 1:1 mixture of isopropyl alcohol and water, then again with methyl ethyl ketone and finally allowed to air dry.

*2) LDPE*

Low density polyethylene (LDPE) film having a thickness of 60 microns was obtained as Type 16 00 000, transparent LDPE having a density of 0.923 from 4P Folienfabrik Forchheim, Forchheim, Germany.

*3) Wood*

A block of milled Meranti wood was sanded with fine sandpaper and employed in static coefficient of friction measurements.

The static coefficient of friction was calculat ed as follows:
Static coefficient of friction ($\mu_S$)

$$\mu_S = F_S/F_\rho$$

where

$F_S$ = static frictional force
$F_\rho$ = the normal force (the force acting perpendicular to the surfaces in contact, i. e. 200 g or 1,200 g)

Measurements were made using a commercially available tensile tester (Instron (TM)). Test data were collected and coefficient of friction results were calculated using the software package testXpert ® Version 04.96 / T-01-00 (Copyright 1996) available from Zwick GmbH & Co in Ulm, Germany. The test sled was pulled for a total distance of ca. 7.5 cm at a rate of 100 mm / min.

The data used for calculating the static coefficient of friction were generated in one test. The test was repeated using three different samples of the pressure-sensitive adhesive film comprising skid-resistant exposed layer 1.

*90° peel adhesion of BOPP film from the surface of exposed layer 1 of pressure-sensitive adhesive film 10*

90° peel adhesion of a strip of biaxially-oriented polypropylene from the exposed surface 1 of the pressure-sensitive adhesive film was measured using a tensile tester adapted in a special configuration to allow a peel angle of 90° to be maintained during the test. The equipment configuration is described in FINAT Test Method no. 2, a standard 90° peel test method (available from Federation Internationale des Fabricants Europeens et Transformateurs d'Adhesifs et Thermocollants sur Papiers et autres Supports (FINAT)).

There were several exceptions to the described FINAT method which are given below:

1) A "standard FINAT test roller" was replaced by a 6.8 kg roller.
2) The laminate including the tape and the BOPP film was rolled twice at 300 mm/min rather than twice at 200 mm/min as called for by the FINAT 2 method.

The pressure-sensitive adhesive film including its exposed layer 1 to be evaluated was cut into strips having a width of 2.54 cm. The strips of the pressure-sensitive adhesive film were bonded to a test plate using its pressure-sensitive adhesive layer 4. A strip of biaxially-oriented polypropylene (BOPP) film (36 µm thick, available as WALOTHEN 040E from Wolff Walsrode AG, Walsrode, Germany, not corona-treated or chemically primed) having the same width as the tape was then rolled down onto the surface of the exposed layer 1 of the pressure-sensitive adhesive film, using a 6.8 kg roller at a speed of 300 mm/min.

The force required for removal of the BOPP film from the surface of the exposed layer 1 of the pressure-sensitive adhesive film after a dwell time of 20 min. at 23 °C was then measured using a tensile tester arranged in a configuration so that the peel angle from the substrate bearing the interlayer was maintained at 90° during the test.

Each exposed layer to be tested was evaluated using three different samples of the pressure-sensitive adhesive film and the results were averaged. 90° peel adhesion results were recorded in N/2.54 cm.

*Vicat softening point, °C*

The Vicat softening points of polymers employed in the examples were taken from the respective manufacturer's literature for the polymeric materials and were measured according to EN ISO 306:1994 using a force of 10 N by which the steel rod with its indenting tip is pressed into the polymer sample, and a temperature increase rate of 120°C/hour.

*Transmission of visible light*

Regular transmittance ($T_r$) was measured according to ASTM D 1746-97. A 1 mm thick sample of the pressure-sensitive adhesive layer or multilayer laminate, respectively, of the present invention, was suspended as an unsupported film in a cuvette holder and placed in the beam of a UV-visible spectrophotometer, commercially available as 550 SE from Perkin-Elmer Associates. The spectrophotometer had been adjusted so that when no sample was in the beam, a transmittance of 100% was indicated. The average value of regular transmittance, $T_r$, in the range of 540 nm to 560 nm was recorded as called for by the method.

Percent regular transmittance , $T_r$, can be calculated as follows:

$$T_r = 100 \, I_r \, / \, I_0$$

where:

$I_r$ = light intensity with the specimen in the beam and $I_0$ = light intensity with no specimen in the beam.

Material employed in the examples

AFFINITY™ KC 8852 - a polyolefin plastomer (POP) produced using INSITE (TM) Technology from Dow Plastics, comprising a saturated ethylene octene copolymer, Vicat softening point of 48 °C, melt index (190 °C / 2.16 kg) measured by ISO 1133 (g/10 min) = 3.0, density of 0.875, available as AFFINITY™ KC 8852 from Dow Plastics, a business unit of Dow Europe S.A.

AFFINITY™ EG 8150 - a polyolefin plastomer (POP) comprising a saturated ethylene octene copolymer, melt index (190 °C / 2.16 kg) measured by ISO 1133 (g/10 min) = 0.5, Mooney viscosity (ML 1+4/121 °C) according to DIN 53523/T1 of 35, density of 0.868, Vicat softening point of 45 °C, available as AFFINITY EG 8150 from Dow Plastics, a business unit of Dow Europe S.A.

LDPE - low density polyethylene, Vicat softening point of 96°C, available from as PLASTOTRANS(T) 160 000 from 4P Folien Fabrik Forchheim, Forchheim, Germany

BYNEL™ 3101 - an acid-acrylate modified ethylene-vinyl acetate copolymer from Dupont, Bad Homburg, Germany.

LACQTENE™ LA 0710 - a low density radical polyethylene made by high pressure autoclave process. Melt index according to ISO 1133 (g/10 min) of 7.5 and density of 0.918. Available from ATOFINA, Duesseldorf. Germany

Examples

*Example 1*

A clear polyethylene terephthalate (PET) film having a thickness of 50 μm was corona-treated on both sides and then used as a support layer for extrusion of a single 100 μm layer of the very low density polyethylene (AFFINITY™ KC 8852) which formed the exposed layer. AFFINITY™ KC 8852 is a polyolefin plastomer (POP) produced using INSITE (TM) Technology from Dow Plastics, comprising a saturated ethylene octene copolymer, Vicat softening point of 48 °C, melt index (190 °C / 2.16 kg) measured by ISO 1133 (g/10 min) = 3.0, density of 0.875, available as AFFINITY™ KC 8852 from Dow Plastics, a business unit of Dow Europe S.A.

Directly after extrusion the very low density polyethylene layer was pressed against a chilled steel roll having a smooth finish and designed to produce a smooth glossy finish on a polymer film surface. The resulting polymeric surface had a roughness, $R_z$, as measured according to DIN 4768 (Sheet 1) of 3.6. The support layer could be clearly and distinctly seen through the exposed layer.

A biaxially-oriented polypropylene (BOPP) film having a thickness of 35 microns was laminated to the exposed surface of the very low density polyethylene (AFFINITY™ KC 8852) layer. The BOPP film adhered lightly to the low density polyethylene layer and served as a protective layer to prevent scratching or scuffing of the surface during converting processes, transportation and application of the tape to a substrate in a vehicle. The 90° peel adhesion value of the BOPP film from the very low density polyethylene was 0.5 N/ 2.54 cm.

The exposed surface of the polyester support layer was then printed with the word "TEST" in black letters with a grey background, using flexographic printing ink. The print was applied in such a fashion that is could be read correctly through the polyester support layer and the very low density polyethylene layer.

An acrylic pressure-sensitive adhesive layer having a thickness of 50 microns, borne on a release liner, was then laminated onto the printed surface of the polyester support layer. The acrylic pressure-sensitive adhesive layer is commercially available as 3M™ Adhesive Transfer Tape # 467 from 3M Company, St. Paul, MN/USA.

A sample of the pressure-sensitive adhesive film of example 1 was cut out into a rectangle measuring about 10 cm x 20 cm. The release liner protecting the pressure-sensitive adhesive surface was removed and discarded. The adhesive surface of the film was pressed firmly against the bottom, horizontal surface of a box-like retaining area located between the driver's seat and passenger front seat of a passenger car. The film covered the bottom of the retaining area.

The protective BOPP layer was also removed from the top surface of thefilm . The surface of the exposed layer of the pressure-sensitive adhesive film was very lightly tacky to the touch.

A key ring with six keys on it was placed in the box-like retaining area on the smooth tape surface during movement of the vehicle. The keys did not rattle or produce a distracting noise nor did they slide within the box during movement of the vehicle.

*Example 2*

Example 1 was repeated with two exceptions:

1) directly after extrusion the exposed layer of very low density polyethylene was pressed against a chilled steel roll embossed with a fine pattern so as to generate a matte finish.

2) no BOPP protective sheet was employed to cover the embossed very low density polyethylene layer.

The matte finish surface of the very low density polyethylene layer was soft and not tacky to the touch.

The surface of the exposed layer obtained after pressing against the embossed steel roll had a roughness, Rz, as measured according to DIN 4768 (Sheet 1) of 16.8 µm.

Static coefficient of friction measurements were made against three test substrates. The results are summarized in table 2.

The pressure-sensitive adhesive film provided a pleasing visual effect and a translucent look to the surface of the sheet. The printing between the polyester support layer and the adhesive layer was still clearly visible, however.

A sample of pressure-sensitive adhesive film of example 2 was cut out into a rectangle measuring about 10 cm x 20 cm. The release liner protecting the pressure-sensitive adhesive layer 4 was removed and discarded. The pressure-sensitive adhesive layer of the film was pressed firmly against the bottom, horizontal surface of a box-like retaining area located between the driver's seat and passenger seats in the front seat of a passenger car. The tape covered the bottom of the retaining area.

A key ring with six keys on it was placed in the box-like retaining area on the rough tape surface during movement of the vehicle. The keys did not rattle or produce a distracting noise nor did they move during movement of the vehicle.

The rough surface provided a pleasing appearance and was also advantageous that small scratches, scuff marks or defects in the exposed layer of polymer which appear with use were not readily visible.

*Example 3*

Example 1 was repeated with the exception that a tie layer 5 of 50 microns of low density polyethylene (BYNEL ™ acid-acrylate modified ethylene-vinyl acetate copolymer from Dupont) was applied by means of co-extrusion to the exposed layer 1 comprising 50 microns of AFFINITY™ EG 8150. AFFINITY™ EG 8150 is a polyolefin plastomer (POP) comprising a saturated ethylene octene copolymer, melt index (190 °C / 2.16 kg) measured by ISO 1133 (g/10 min) = 0.5, Mooney viscosity (ML 1+4/121 °C) according to DIN 53523/T1 of 35, density of 0.868, Vicat softening point of 45 °C, available as AFFINITY EG 8150 from Dow Plastics, a business unit of Dow Europe S.A.

The co-extrusion of the two-layer film comprising the exposed layer 1 and the tie layer 5 onto the polyester support layer 2 was performed using a commercially available multilayer extrusion die fed by two extruders. Directly after the extrusion, the exposed layer 1 of very low density polyethylene was pressed against a smooth stainless steel chilled roll of example 1.

*Example 4*

Example 3 was repeated with the exception that the exposed layer 1 was pressed against the patterned roll of example 2 directly after extrusion to generate a matte surface.

*Examples 5 - 6*

Examples 3 and 4 were repeated with the exception that the BYNEL™ tie layer was omitted. The thickness of the AFFINITY™ EG 8150 exposed layer was doubled from 50 µm to 100 µm. Both smooth and matte version were prepared by the method described in examples 1 and 2.

*Examples 7 - 8*

Examples 3 and 4 were repeated with the exception that the relative thicknesses of the BYNEL ™ tie-layer and the AFFINITY™ EG 8150 exposed layer were altered. The tie-layer was increased to 75 µm and the AFFINITY™ EG 8150 was decreased to 25 µm. Both smooth and matte version were prepared by the method described in Examples 1 and 2.

*Example 9*

A 50 µm thick polyester support layer was extrusion coated with a tie layer comprising 32 µm LACQTENE™ LA 0710 and an exposed layer comprising 100 µm AFFINITY™ KC 8852 using the method of example 3 . The exposed surface was pressed against the smooth chilled roll of example 1 after extrusion to generate a glossy surface.

The 90° peel adhesion of a BOPP film from the surface of the exposed layer of the pressure-sensitive adhesive film was 0.5 N/2.54 cm.

*Example 10*

Example 1 was repeated with the exception that the acrylic transfer tape was replaced with a less aggressive acrylic pressure-sensitive adhesive layer available from 3M as # 9415 This adhesive layer allowed the pressure-sensitive adhesive film to be simply removed or removed and replaced within a period of a few weeks to months from plasticized polyvinyl chloride (PVC) surfaces commonly used in automotive interiors.

Comparative example 1

A low density polyethylene (LDPE) having a density of 0.923 and a Vicat softening point of 96 °C (available as PLASTOTRANS™ 160 000 from 4P Folien Fabrik Forchheim, Forchheim, Germany) was extruded into a single layer transparent film having a thickness of 60 μm. The film was pressed against the smooth chilled roll of example 1 after extrusion and had a glossy surface.

The static coefficient of friction of this film against three test substrates was measured as described in the test method above. The COF results are shown in table 2.

Table 1

| Ex. | PSA type | Support layer | Tie layer | Exposed layer | | | BOPP cover film |
|---|---|---|---|---|---|---|---|
| | | | | Material | Texture | Vicat s.p., °C | |
| 1 | ++ | Polyester, 50 μm | -- | AFFINITY™ KC 8852, 100 μm | Smooth ($R_z$ = 3.6) | 48 | Yes |
| 2 | ++ | Polyester, 50 μm | -- | AFFINITY™ KC 8852, 100 μm | Matte ($R_z$ = 16.8) | 48 | No |
| 3 | ++ | Polyester, 50 μm | BYNEL™ 3101, 50 μm | AFFINITY™ EG 8150, 50 μm | Smooth | 45 | Yes |
| 4 | ++ | Polyester, 50 μm | BYNEL™ 3101, 50 μm | AFFINITY™ EG 8150, 50 μm | Matte | 45 | No |
| 5 | ++ | Polyester, 50 μm | -- | AFFINITY™ EG 8150, 100 μm | Smooth | 45 | Yes |
| 6 | ++ | Polyester, 50 μm | -- | AFFINITY™ EG 8150, 100 μm | Matte | 45 | No |
| 7 | ++ | Polyester, 50 μm | BYNEL™ 3101, 75 μm | AFFINITY™ EG 8150, 25 μm | Smooth | 45 | Yes |
| 8 | ++ | Polyester, 50 μm | BYNEL™ 3101, 75 μm | AFFINITY™ EG 8150, 25 μm | Matte | 45 | No |
| 9 | ++ | Polyester, 50 μm | LACQ-LA0710, 32 μm | AFFINITY™ KC 8852, 75 μm | Smooth | 48 | Yes |

++ Aggressive acrylic PSA

Table 1   (continued)

| Ex. | PSA type | Support layer | Tie layer | Exposed layer | | | | BOPP cover film |
|---|---|---|---|---|---|---|---|---|
| | | | | Material | Texture | Vicat s.p., °C | | |
| 10 | + | Polyester, 50 µm | -- | AFFINITY™ KC 8852, 100 µm | Smooth | 48 | | Yes |
| C1 | -- | -- | -- | LDPE, 60 µm | Smooth | 96 | | -- |

+ Repositionable/removable PSA

Table 2:

| Static coefficient of friction of exposed layer | | | | | | |
|---|---|---|---|---|---|---|
| Example | | | COF | | | |
| | LDPE | LDPE | Wood | Wood | Stainless steel | Stainless steel |
| | 200 g | 1200 g | 200 g | 1200 g | 200 g | 1200 g |
| 1 | 6.8 | 4.9 | 1.7 | 1.4 | 5.1 | 3.5 |
| 2 | 1.6 | 1.5 | 1.4 | 1.3 | 2.0 | 1.6 |
| 3 | 5.9 | 4.2 | 1.7 | 1.6 | 3.3 | 3.7 |
| 4 | 2.0 | 2.0 | 1.6 | 1.0 | 2.4 | 1.9 |
| 5 | 12.5 | 5.6 | 2.1 | 1.8 | 4.2 | 3.4 |
| 6 | 1.4 | 2.1 | 2.1 | 1.7 | 2.2 | 1.9 |
| 7 | 5.1 | 3.7 | 1.8 | 1.6 | 2.6 | 3.5 |
| 8 | 1.9 | 1.7 | 1.5 | 1.4 | 2.5 | 2.0 |
| 9 | 7.6 | 4.8 | 1.8 | 1.2 | 5.2 | 3.2 |
| C1 | 0.8 | 0.6 | 0.2 | 0.4 | 0.4 | 0.4 |

**Claims**

1. Use of a pressure-sensitive adhesive film comprising a backing bearing a pressure-sensitive adhesive film, said backing comprising two or more layers, the exposed layer of the backing being a polymer layer wherein the polymer has a Vicat softening point of less than 65 °C, for providing skid resistance to a substrate.

2. Use according to claim 1 wherein the exposed layer of the backing comprises one or more polymers which are selected from a group consisting of very low density polyethylenes (VLDPEs).

3. Use according to any of claims 1 or 2 for restraining movement of an article on a substrate in a vehicle.

4. Pressure-sensitive adhesive film comprising a backing bearing a pressure-sensitive adhesive layer, said backing comprising two or more layers, the exposed layer of the backing being a polymer layer wherein the polymer has a Vicat softening point of less than 65 °C.

5. Pressure-sensitive adhesive film according to claim 4 wherein the exposed layer of the backing exhibits a surface roughness $R_Z \geq 12$ µm or a surface roughness $R_Z \leq 6$ µm.

6. Pressure-sensitive adhesive film according to any of claims 4 - 5 wherein the exposed layer is transparent.

**7.** Pressure-sensitive adhesive film according to any of claims 4 - 5 wherein the exposed layer is translucent.

**8.** Pressure-sensitive adhesive film according to any of claims 4 - 7 wherein the exposed layer 1 comprises one or more polymers which are selected from a group consisting of very low density polyethylenes (VLDPEs).

**9.** Pressure-sensitive adhesive tape according to any of claims 4 - 8 wherein the exposed layer of the backing has a thickness of between 15 - 400 $\mu$m.

**10.** Pressure-sensitive adhesive tape according to any of claims 4 - 9 wherein the backing comprises at least one non-exposed support layer comprising a polymer selected from the group consisting of polyolefins, polyesters, polystyrenes, polycarbonates, polyvinylchlorides, polyamides and blends of two or more of such polymers.

**11.** Pressure-sensitive adhesive tape according to any of claims 4 - 10 wherein the non-exposed support layer or layers of the backing have independently from each other a thickness of between 10 - 200 $\mu$m.

**12.** Pressure-sensitive adhesive tape according to any of claims 4 - 11 wherein the pressure-sensitive adhesive layer comprises an acrylic based pressure-sensitive adhesive.

**13.** Pressure-sensitive adhesive tape according to any of claims 4 - 12 comprising a printing layer on the surface of the support layer facing the pressure-sensitive adhesive layer.

**14.** Pressure-sensitive adhesive layer according to any of claims 4 - 13 comprising a tie-layer on the non-exposed surface of the exposed layer of the backing.

**15.** Method of preparing a pressure-sensitive adhesive tape according to any of claims 4 - 14 comprising the steps of (i) co-extruding the layers of the backing, and (ii) adhering a pressure-sensitive adhesive layer opposite to the exposed layer of the backing.

**16.** Method according to claim 15 wherein chemical primer and/or corona treatment is applied to the surface of the backing which is opposite to the exposed layer of the backing, prior to adhering of the pressure-sensitive adhesive layer.

*Fig. 1*

*Fig. 2*

*Fig. 3*

20

12

2

22

22

23

Fig. 4